# EUROPEAN PATENT APPLICATION

(11) **EP 4 501 450 A1**
(43) Date of publication of application: **05.02.2025**
(21) Application number: 23780785.4
(22) Date of filing: 29.03.2023
(51) Int. Cl.: B01J 29/035, C01B 3/40, C01B 37/02

(54) **COMPOSITE, COMPOSITE PRODUCTION METHOD, AND CATALYST STRUCTURE**

(30) Priority: 29.03.2022 JP 2022053978
(71) Applicant: FURUKAWA ELECTRIC CO., LTD., Tokyo 100-8322 (JP); NATIONAL UNIVERSITY CORPORATION HOKKAIDO UNIVERSITY, Kita-ku Sapporo-shi Hokkaido 060-0808 (JP)
(72) Inventor: KAWAMATA Yuki, Tokyo 100-8322 (JP); BANBA Yuichiro, Tokyo 100-8322 (JP); FUJIKAWA Takashi, Tokyo 100-8322 (JP); IWANO Yuki, Tokyo 100-8322 (JP); LEE Yu, Tokyo 100-8322 (JP); HIRANO Junya, Tokyo 100-8322 (JP); MASUDA Takao, Sapporo-shi, Hokkaido 060-0808 (JP); NAKASAKA Yuta, Sapporo-shi, Hokkaido 060-0808 (JP)
(74) Representative: Winter, Brandl - Partnerschaft mbB
(86) International application number: PCT/JP2023/013005
(87) International publication number: WO 2023/190777

(57) **Abstract**

A composite comprising: a skeleton having a porous structure and containing a crystalline Si0₂ compound; and a fine particle including a metal oxide fine particle or a metal fine particle existing within the skeleton.

## Description

### TECHNICAL FIELD

The present disclosure relates to a composite, a production method for a composite, and a catalyst structure.

### BACKGROUND ART

Technologies using zeolites have been studied in a variety of fields.

As crude oil becomes heavier, in the hydrocracking process in which a desulfurized heavy oil, a desulfurized heavy gas oil, and the like obtained by hydrodesulfurization process of a heavy oil in a hydrodesulfurization apparatus such as a direct desulfurization apparatus or an indirect desulfurization apparatus are further cracked to boost the production of desulfurized naphtha, desulfurized kerosene, desulfurized gas oil and like, a hydrocracking catalyst has been proposed which contains zeolite and a porous inorganic oxide in a specific ratio.

In addition, Patent Document 1 describes a honeycomb structure for the exhaust gas purification of automobile exhaust gas or the like. The honeycomb structure of Patent Document 1 is configured by bonding, through an adhesive layer, a plurality of columnar honeycomb units, each of which contains zeolite and an inorganic binder and in which a plurality of cells extending along a longitudinal direction from a first end face to a second end face are partitioned by cell walls.

The above-described catalyst is used in the form of a molded catalyst obtained by kneading zeolite or the like into a binder such as alumina, and molding the resulting mixture into a predetermined shape, or a structured catalyst obtained by making a zeolite or the like adhere to the surface of a support such as an inactive metal or a metal oxide.

However, such catalysts cause large density changes in high temperature reactions, particularly in reactions where H₂O is added or produced. When the catalyst causes a density change, since the volume of the catalyst changes, it may cause problems such as cracking in the molded catalyst, and separation of zeolite from the support in the structured catalyst. In this way, since it is difficult to maintain the structure of the molded catalyst and the structured catalyst, it is not easy to stably and safely carry out a predetermined reaction over a long period of time.

### Citation List

### Patent Document

Patent Document 1: Japanese Unexamined Patent Application, Publication No. 2011-56328

### DISCLOSURE OF THE INVENTION

### Problems to be Solved by the Invention

An object of the present disclosure is to provide a composite, a production method thereof, and a catalyst structure using the composite, which can suppress a density change under high temperatures, and can perform a predetermined reaction stably and safely over a long period of time.

### Means for Solving the Problems

[1] A composite includes: a skeleton having a porous structure and containing a crystalline SiO₂ compound; and a fine particle including a metal oxide fine particle or a metal fine particle existing within the skeleton.
[2] In the composite as described in the above [1], the crystalline SiO₂ compound is at least one compound selected from the group consisting of cristobalite, tridymite, quartz, stishovite, and coesite.
[3] In the composite as described in the above [1] or [2], an abundance ratio of the crystalline SiO₂ compound in the skeleton is 40% or more.
[4] In the composite as described in any one of the above [1] to [3], an average particle size of the fine particles is 0.08 nm or more and 50.00 nm or less.
[5] In the composite as described in any one of the above [1] to [4], an average particle size of the metal oxide fine particles is 0.10 nm or more and 50.00 nm or less.
[6] In the composite as described in any one of the above [1] to [4], an average particle size of the metal fine particles is 0.08 nm or more and 30.00 nm or less.
[7] In the composite as described in any one of the above [1] to [6], the composite is used for Fischer-Tropsch synthesis, steam reforming, dry reforming, partial oxidation reforming, methanol reforming, methanol synthesis, hydrocracking, catalytic cracking, hydrodesulfurization, ammonia cracking, ammonia synthesis, CO shift reaction, reverse shift reaction, exhaust gas purification, fluid catalytic cracking, N₂O cracking, CO treatment, NO cracking, volatile organic material synthesis, volatile organic material removal, NOx reduction, alkane dehydrogenation, olefin synthesis or aromatic synthesis.
[8] A catalyst structure is made using the composite as described in any one of the above [1] to [7].
[9] A production method for a composite includes heat treating a precursor material having a structure in which a fine particle including a metal oxide fine particle or a metal fine particle is enclosed in a SiO₂-based skeleton, under a high temperature atmosphere with H₂O present.
[10] In the production method for a composite as described in the above [9], the SiO₂-based skeleton is a zeolite.

### Effects of the Invention

According to the present disclosure, it is possible to provide a composite, a production method thereof, and a catalyst structure using the composite, which can suppress a density change under high temperatures, and can perform a predetermined reaction stably and safely over a long period of time.

### BRIEF DESCRIPTION OF THE DRAWINGS

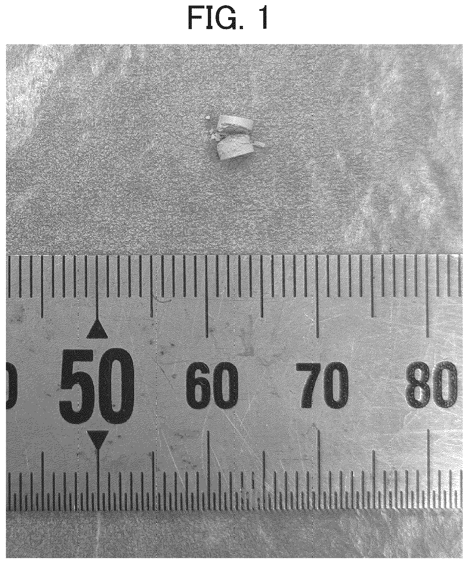

FIG. 1 is an image after a catalytic activity test of the pellet obtained using the composite of Comparative Example 1.

### PREFERRED MODE FOR CARRYING OUT THE INVENTION

Hereinafter, an embodiment will be described in detail with reference to the drawings.

The present inventors have focused on the fact that the cause inducing a large density change by a high-temperature reaction or the like is a phase change in which the crystal structure changes. Additionally, the present inventors have studied the components contained in the skeleton constituting the composite, and has found that a change in the crystal structure of the skeleton accompanying a change in density at a high temperature is controlled by using a crystalline SiO₂ compound that is stable even at a high temperature, whereby a predetermined reaction is stably and safely performed over a long period of time, thereby arriving at completion of the present disclosure based on such findings.

### [Configuration of Composite]

The composite of the embodiment includes a skeleton having a porous structure and containing a crystalline SiO₂ compound, and a fine particle including a metal oxide fine particle or a metal fine particle existing within the skeleton.

The skeleton constituting the composite contains one or more types of crystalline SiO₂ compounds, and has a porous structure. The crystalline SiO₂ compound contained in the skeleton is not a zeolite. That is, a zeolite is not contained in the crystalline SiO₂ compound.

The composite includes one or more fine particles. The fine particle includes a metal oxide fine particle or a metal fine particle, and is present within the skeleton. In addition, the fine particle may be a primary particle or a secondary particle formed by the primary particle aggregating.

The fine particle exhibit one or more functions independently or in cooperation with the skeleton. Example of such function include a catalytic function, luminescent function, fluorescent function, light absorbing function, identification function, or the like. The fine particle is preferably, for example, a catalytic substance having a catalytic function. When the fine particle is a catalytic substance, the skeleton is a carrier supporting the catalytic substance.

The specific application relating to the catalytic function of the composite includes Fischer-Tropsch synthesis, steam reforming, dry reforming, partial oxidation reforming, methanol reforming, methanol synthesis, hydrocracking, catalytic cracking, hydrodesulfurization, ammonia cracking, ammonia synthesis, CO shift reaction, reverse shift reaction, exhaust gas purification, fluid catalytic cracking, N₂O cracking, CO treatment, NO cracking, volatile organic material synthesis, volatile organic material removal, NOₓ reduction, alkane dehydrogenation, olefin synthesis, aromatic synthesis or the like.

Since the skeleton has a porous structure, the skeleton has a large number of pores including through-holes and bottomed holes. The plurality of fine particles existing within the skeleton are in communication with the outside of the skeleton through one or more pores.

The crystalline SiO₂ compound constituting the skeleton has a porous structure. The plurality of the fine particles is present within the crystalline SiO₂ compound. The crystalline SiO₂ compound has a crystal structure (crystal phase) of SiO₂ different from that of a zeolite such as silicalite or amorphous silica. Therefore, even when the composite is exposed to a high-temperature reaction, in particular, a reaction in which H₂O is added or generated, the density change of the crystalline SiO₂ compound is decreased or the density change of the crystalline SiO₂ compound does not occur due to the reaction, and thus the density change of the skeleton due to the change of the crystal structure of the skeleton can be suppressed.

Therefore, in the case of the composite being applied to a molded catalyst, cracking or the like of the molded catalyst can be suppressed, and in the case of the composite being applied to the structured catalyst, peeling or the like from the support can be suppressed, and the structure can be stably maintained over a long period of time. As a result, even when the composite is used industrially, since blocking of the reaction tube in the reaction system can be suppressed while maintaining the strength over a long period of time, the composite can stably and safely perform a predetermined reaction over a long period of time.

From the viewpoint of decreasing a change in density under an environment such as a high temperature, the crystalline SiO₂ compound is preferably at least one compound selected from the group consisting of cristobalite, tridymite, quartz, stishovite and coesite, is more preferably at least one compound selected from the group consisting of cristobalite, tridymite and quartz, and is still more preferably cristobalite. Such compounds are structurally stable even under an environment such as a high temperature.

In addition, the abundance ratio of the crystalline SiO₂ compound in the skeleton is preferably 40% or more, is more preferably 65% or more, and is still more preferably 95% or more. As the abundance ratio of the crystalline SiO₂ compound increases, it becomes structurally stable even under an environment such as a high temperature.

Furthermore, in addition to the crystalline SiO₂ compound, the skeleton may contain a component such as a zeolite-type compound.

The zeolite-type compound has a porous structure, and has molecular sieving ability. The plurality of fine particles may exist within the zeolite-type compound. The zeolite-type compound has passages communicating with each other by a plurality of holes being formed. The fine particles may be present in the passage of the zeolite-type compound, and are preferably retained in at least the passage of the zeolite-type compound.

According to such a configuration, the movement of the fine particles in the zeolite-type compound is restricted, and the aggregation of the fine particles is effectively prevented. As a result, a decrease in the effective surface area of the fine particles can be effectively suppressed, and the function of the fine particles is sustained over a long period of time. That is, it is possible to suppress a decrease in the function due to aggregation of the fine particles, and it is possible to prolong the life of the composite. In addition, due to prolonging the life of the composite, the frequency of replacement of the composite can be reduced, the waste amount of the used composite can be significantly reduced, and thus resource savings can be achieved.

An example of the zeolite-type compound include a silicate compound such as zeolite (aluminosilicate), cationexchanged zeolite, or silicalite; a zeolite-analogue compound such as aluminoborate, aluminoarsenate, and germanate; and a phosphate-based zeolite analogue compound such as molybdenum phosphate. Among them, the zeolite-type compound is preferably a silicate compound.

The skeleton structure of the zeolite-type compound is selected from among FAU type (Y type or X type), MTW type, MFI type (ZSM-5), FER type (ferrierite), LTA type (A type), MWW type (MCM-22), MOR type (mordenite), LTL type (L type), BEA type (beta type) and the like, is preferably MFI type, and is more preferably ZSM-5. In the zeolite-type compound, a plurality of holes having a hole diameter corresponding to each skeleton structure are formed, and for example, the maximum hole diameter of the MFI type is 0.636 nm (6.36 Å) and the average hole diameter is 0.560 nm (5.60 Å).

The abundance ratio of the crystalline SiO₂ compound can be measured by XRD (X-ray diffraction) under the following conditions. The following is an example of calculating the abundance ratio of cristobalite.
- Measurement conditions: measured by a reflection method using a D8 ADVANCE (manufactured by Bruker) as the apparatus, X-ray (target: Cu) as the light source, and a LYNXEYE/SSD160 detector (one-dimensional semiconductor) as the detector.
- Peak of cristobalite: peak around 22°
- Peak of MFI type zeolite: peak around 8°
Abundance ratio of crystalline SiO2 compound = (peak height of crystalline SiO2 compound)/(peak height of crystalline SiO2 compound + peak height of MFI zeolite)×100

In a case where the peak of the crystalline SiO₂ compound overlaps with the peak of another substance, the peak angle of the crystalline SiO₂ compound is not limited to the above-described peak angle, and the peak angle inherent to the crystalline SiO₂ compound may be selected. The peak to be selected is preferably used a high peak separable from peaks derived from other crystalline substances. Therefore, the above peaks are an example, and the peak height can be calculated by a well-known method using the peaks attributed to the respective crystalline substances, and the abundance ratio can be obtained from the peak height ratio.

Typically, when the composite is used in a fluid (e.g., heavy oil, a reformed gas such as NOx, etc.), there is a possibility of external forces being applied from the fluid. In this case, if the fine particle is held in an attached state only on the outer surface of the skeleton, there is a problem in that the fine particle easily breaks away from the outer surface of the skeleton due to the influence of the external forces from the fluid. In contrast, in the composite of the embodiment, the fine particles are present within the skeleton, i.e., in the crystalline SiO₂ compound, and/or are present in at least the passages of the zeolite-type compound. Therefore, even when the composite is affected by an external forces from the fluid, the fine particles are less likely to break away from the skeleton. Furthermore, when the composite is in the fluid, since the fluid flows into the interior from the pores of the crystalline SiO₂ compound and flows into the passages from the pores of the zeolite-type compound, the speed of the fluid flowing in the pores of the crystalline SiO₂ compound and in the passages of the zeolite-type compound is considered to be slower than the speed of the fluid flowing on the outer surface of the composite due to the flow path resistance (friction force). Due to the influence of such flow path resistance, the pressure received from the fluid on the fine particle present within the skeleton becomes lower than the pressure received from the fluid on the fine particle present on the outer surface of the skeleton. Therefore, it is possible to effectively suppress the fine particle present within the skeleton from breaking off, and it is possible to stably maintain the function of the fine particle over a long period of time.

From the viewpoint of suppressing breaking off of the fine particle present within the skeleton, the fine particles preferably have an average particle size larger than the average pore diameter of the skeleton. In particular, the skeleton preferably has an average pore diameter of 0.05 nm or more and 25.00 nm or less. The average particle size of the fine particles is preferably 0.08 nm or more and 50.00 nm or less.

In addition, the passage of the zeolite-type compound preferably has any one of a one-dimensional hole, a two-dimensional hole, and a three-dimensional hole defined by the skeleton structure of the zeolite-type compound, and an expanded-diameter portion different from all of the one-dimensional hole, the two-dimensional hole, and the three-dimensional hole described above. Here, the one-dimensional hole refers to a tunnel-type or cage-type hole forming a one-dimensional channel, or a plurality of tunnel-type or cage-type holes (a plurality of one-dimensional channels) forming a plurality of one-dimensional channels. In addition, the two-dimensional hole refers to a two-dimensional channel in which a plurality of one-dimensional channels is connected in twodimensions, and the three-dimensional hole refers to a three-dimensional channel in which a plurality of one-dimensional channels is connected in three-dimensions.

In more detail, the one-dimensional hole, two-dimensional hole, and three-dimensional hole of the zeolite-type compound refer to the pore structure inherent in various zeolites published in the Database of Zeolite Structures. The expanded-diameter portion of the zeolite-type compound refers to a pore structure not published therein.

The average particle size of the fine particles is preferably larger than the average pore size of the one-dimensional holes, the two-dimensional holes and the three-dimensional holes defined by the zeolite-type compound. In addition, the fine particle is preferably present in at least the expanded-diameter portion, and more preferably, the fine particle is included in at least the expanded-diameter portion.

As a result, the movement of the fine particle in the skeleton is further restricted, and braking off of the fine particle and aggregation of the fine particles can be more effectively prevented. The inclusion of the fine particle in the expanded-diameter portion refers to a state in which the fine particle is enclosed in the zeolite-type compound. At this time, the fine particle and the zeolite-type compound do not necessarily have to be in direct contact with each other, and the fine particle may be indirectly held in the zeolite-type compound in a state where another substance (for example, a surfactant or the like) is interposed between the fine particle and the zeolite-type compound.

Furthermore, the fine particle present in the zeolite-type compound may exist within the passages in a state in which a part of the fine particle protrude to outside of the expanded-diameter portion. In addition, the fine particle may be partially embedded in a portion of the passage other than the expanded-diameter portion (for example, an inner wall portion of the passage), or may be held by fixation or the like.

Furthermore, it is preferable that the expanded-diameter portion of the zeolite-type compound communicates between a plurality of holes constituting any of the one-dimensional holes, the two-dimensional holes, and the three-dimensional holes. Accordingly, since a separate passage different from the one-dimensional holes, the two-dimensional holes, or the three-dimensional holes is provided within the zeolite-type compound, the functions of the fine particle can be further exhibited.

In addition, it is preferable that the passage is formed in a three-dimensional manner including a branching portion or a converging portion inside of the zeolite-type compound, and that the expanded-diameter portion is provided in the branching portion or the converging portion of the passage.

The average inner diameter of the passages formed in the zeolite-type compound is calculated from the average value of the minor axis and the major axis of the hole constituting any of the one-dimensional holes, the two-dimensional holes, and the three-dimensional holes, and is, for example, 0.1 nm or more and 25.0 nm or less, and is preferably 0.5 nm or more and 5.0 nm or less. In addition, the inner diameter of the expanded-diameter portion of the zeolite-type compound is, for example, 0.5 nm or more and 50.0 nm or less, is preferably 1.1 nm or more and 40.0 nm or less, and is more preferably 1.1 nm or more and 3.3 nm or less. The inner diameter of the expanded-diameter portion depends on, for example, the pore diameter of a precursor material (A) described later and the average particle size of the fine particles included. The inner diameter of the expanded-diameter portion is large enough to include the fine particle.

In addition, the average particle size of the fine particles is preferably larger than the average inner diameter of the passage and equal to or smaller than the inner diameter of the expanded-diameter portion. Such fine particles are preferably included in the expanded-diameter portion in the passage, whereby the movement in the zeolite-type compound is further restricted. Therefore, even when the fine particles receive an external force from the fluid, the movement of the fine particles in the zeolite-type compound is further suppressed, and it is possible to effectively prevent the fine particles included in the respective expanded-diameter portions dispersed and disposed in the passages from coming into contact with each other.

In addition, in the case where the fine particle existing within the skeleton is an metal oxide fine particle, the average particle size of the metal oxide fine particles is preferably 0.10 nm or more and 50.00 nm or less, 0.10 nm or more and less than 30.00 nm, 0.50 nm or more and 14.00 nm or less, and 1.00 nm or more and 12.00 nm or less, in both cases being the primary particles and the secondary particles. Furthermore, the ratio of the average particle size of the metal oxide fine particles to the average inner diameter of the passages of the zeolite-type compound is preferably 0.06 or more and 500.00 or less, is more preferably 0.10 or more and 36.00 or less, is still more preferably 1.10 or more and 36.00 or less, and is particularly preferably 1.70 or more and 4.50 or less.

In addition, the metal element (M) of the metal oxide fine particles is preferably contained in an amount of 0.5% by mass or more and 2.5% by mass or less with respect to the composite, and more preferably contained in an amount of 0.5% by mass or more and 1.5% by mass or less with respect to the composite. For example, in the case where the metal element (M) is Co, the content (mass %) of the Co element is represented by {(mass of Co element)/(mass of all elements of the composite) }×100.

The above-mentioned metal oxide fine particles may be composed of a metal oxide, and for example, may be composed of a single metal oxide, or may be composed of a mixture of two or more types of metal oxides. It should be noted that, in the present specification, the "metal oxide" (as a material) constituting the metal oxide fine particle indicates including an oxide containing one kind of metal element (M) and a composite oxide containing two or more kinds of metal elements (M), and is a generic term for an oxide containing one or more kinds of metal elements (M).

An example of such metal oxide includes cobalt oxide (CoOₓ), nickel oxide (NiOₓ), iron oxide (FeOₓ), copper oxide (CuOₓ), silver oxide (AgOₓ), zirconium oxide (ZrOₓ), cerium oxide (CeOₓ), aluminum oxide (AlO_{X}), niobium oxide (NbOₓ), titanium oxide (TiOₓ), bismuth oxide (BiOₓ), molybdenum oxide (MoOₓ), vanadium oxide (VOₓ), chromium oxide (CrOₓ), magnesium oxide (MgO), calcium oxide (CaO) and gallium oxide (GaOx), and preferably has at least any one or more of the above as a main component.

In addition, in the case where the fine particle existing within the skeleton is an metal fine particle, the average particle size of the metal fine particles is preferably 0.08 nm or more and 30.00 nm or less, 0.08 nm or more and less than 25.00 nm, 0.40 nm or more and 11.00 nm or less, and 0.80 nm or more and 11.20 nm or less, in both cases being the primary particles and the secondary particles. Furthermore, the ratio of the average particle size of the metal fine particles relative to the average inner diameter of the passages of the zeolite-type compound is preferably 0.05 or more and 300.00 or less, is more preferably 0.10 or more and 30.00 or less, is still more preferably 1.10 or more and 30.00 or less, and is particularly preferably 1.40 or more and 3.60 or less.

In addition, the metal element (M) of the metal fine particles is preferably contained in an amount of 0.5% by mass or more and 2.5% by mass or less with respect to the composite, and is more preferably contained in an amount of 0.5% by mass or more and 1.5% by mass or less with respect to the composite.

It is sufficient if the metal fine particles are composed of a non-oxidized metal, for example, and may be composed of a single metal or may be composed of a mixture of two or more metals. It should be noted that, in the present specification, the "metal" (as a material) constituting the metal fine particle indicates including a metal simple substance containing one kind of metal element (M) and a metal alloy containing two or more kinds of metal elements (M), and is a generic term for a metal containing one or more kinds of metal elements.

An example of such a metal includes platinum (Pt), rhodium (Rh), palladium (Pd), ruthenium (Ru), nickel (Ni), cobalt (Co), molybdenum (Mo), tungsten (W), iron (Fe), chromium (Cr), cerium (Ce), copper (Cu), silver (Ag), magnesium (Mg), aluminum (Al), zirconium (Zr), and gallium (Ga), and any one or more of the above metals are preferably used as a main component.

In addition, from the viewpoint of durability, the fine particle is preferably the metal oxide fine particle.

### [Function of Composite]

The composite exhibits a function corresponding to the fine particle by the fine particle present within the skeleton coming into contact with the fluid. Specifically, the fluid in contact with the outer surface of the composite flows into the skeleton from the holes formed at the outer surface, moves inside of the skeleton body, and exits to the outside of the skeleton from other holes formed at the outer surface. A reaction (e.g., a catalytic reaction) according to the function of the fine particle occurs by the fluid contacting with the fine particle in the passages through which the fluid moves in the skeleton. In addition, since the skeleton has a porous structure, the composite has a molecular sieving ability.

First, the molecular sieving ability of the composite will be described with the example of a case where the fluid is a liquid containing benzene, propylene, and mesitylene. A compound (e.g., benzene or propylene) composed of molecules having a size equal to or smaller than the size of the hole or pore can infiltrate into the skeleton. On the other hand, a compound (e.g., mesitylene) composed of molecules having a size exceeding the size of the hole or pore cannot infiltrate into the skeleton. As described above, when the fluid contains a plurality of types of compounds, the reaction of the compound that cannot infiltrate into the skeleton is restricted, and the compound that can infiltrate into the skeleton can be reacted.

Among the compounds generated in the skeleton by reaction, only compounds composed of molecules having a size equal to or smaller than the size of holes or pores can exit to the outside of the skeleton, and thus can be obtained as a reaction product. On the other hand, a compound that cannot exit from the holes or pores to the outside of the skeleton can exit to the outside of the skeleton if it is converted into a compound composed of molecules of a size that can exit to the outside of the skeleton. In this way, a specific reaction product can be selectively obtained by using the composite.

In addition, in the zeolite-type compound, the fine particles are preferably included in the expanded-diameter portion of the passage. When the average particle size of the fine particles is larger than the average inner diameter of the passage of the zeolite-type compound and smaller than the inner diameter of the expanded-diameter portion, a small passage is formed between the fine particle and the expanded-diameter portion. The fluid infiltrating the small passage comes into contact with the fine particle. Since the fine particle is included in the expanded-diameter portion, the movement of the fine particle in the zeolite-type compound is restricted. This prevents aggregation of the fine particles in the zeolite-type compound of the skeleton. As a result, a large contact area between the fine particle and the fluid can be stably maintained.

Next, a case where the fine particle has a catalytic function will be described. As an example, a case where the fine particle is iron oxide (FeOₓ) fine particle, and dodecylbenzene, which is heavy oil, is infiltrated into the skeleton of the composite will be described. When dodecylbenzene infiltrates into the skeleton, the dodecylbenzene is decomposed into various alcohols and ketones by an oxidative decomposition reaction. Furthermore, benzene, which is a light oil, is produced from ketone (herein, acetophenone), which is one of the decomposition products. This indicates that the iron oxide fine particle functions as a catalyst in the oxidative decomposition reaction. In this way, heavy oils can be converted to light oils by using the composite. Conventionally, in order to convert the heavy oil into the light oil, a hydrocracking treatment using hydrogen has been performed. In contrast, when using the composite, hydrogen is not necessary. Therefore, the composite can be used in order to convert the heavy oil into the light oil, even in a region where it is difficult to supply hydrogen. In addition, since hydrogen is not required, it is possible to realize a cost reduction, and it can be expected to promote the utilization of the heavy oil which has not been sufficiently utilized thus far.

In addition, when the composite is used as a catalyst, the composite may be used in the form of a powder; however, it is preferable to use in the form of a catalyst structure made using the composite. The catalyst structure may be a molded body obtained by molding a predetermined amount of the composite in a predetermined mold, or may be a product obtained by making a predetermined amount of the composite adhere to the surface of a support. In this case, various additives may be contained in the catalyst structure in addition to the composite.

### [Production Method of Composite]

Next, a production method for the composite of the embodiment will be described. In the production method of a composite according to the embodiment, a precursor material having a structure in which a fine particle including a metal oxide fine particle or a metal fine particle is enclosed in a SiO₂-based skeleton is heat-treated under a high temperature atmosphere in which H₂O is present. This precursor material is the precursor material (D) described below. The composite produced by the production method of a composite according to the embodiment is the composite of the above embodiment.

### (Step S1: Preparation Step)

First, a precursor material (A) for obtaining a skeleton of a porous structure containing a crystalline SiO₂ compound is prepared. The precursor material (A) is preferably a regular mesoporous material, and can be appropriately selected according to the type of the crystalline SiO₂ compound constituting the skeleton of the composite.

The regular mesoporous material is preferably a compound composed of a Si-O skeleton in which pores having a pore diameter of 1 nm or more and 50 nm or less are developed regularly and in a uniform size in one, two or three dimensions. Such a regular mesoporous material can be obtained as various synthetics depending on the synthesis conditions, and specific examples of the synthetics include SBA-1, SBA-15, SBA-16, KIT-6, FSM-16 and MCM-41, and thereamong, MCM-41 is particularly preferable. It should be noted that the pore size of SBA-1 is 10 nm or more and 30 nm or less, the pore size of SBA-15 is 6 nm or more and 10 nm or less, the pore size of SBA-16 is 6 nm, the pore size of KIT-6 is 9 nm, the pore size of FSM-16 is 3 nm or more and 5 nm or less, and the pore size of MCM-41 is 1 nm or more and 10 nm or less. In addition, examples of such a regular mesoporous material include mesoporous silica, mesoporous aluminosilicate, and mesoporous metallosilicate.

The precursor material (A) may be either a commercially available product or a synthetic product. In the case of synthesizing the precursor material (A), a known method for synthesizing a regular mesoporous substance can be performed. For example, a mixed solution including a raw material containing a constituent element of the precursor material (A), and a template for defining the structure of the precursor material (A) is prepared, and the pH is adjusted as necessary to perform hydrothermal treatment (hydrothermal synthesis). Subsequently, the precipitate (product) obtained by the hydrothermal treatment is recovered (for example, filtered), washed and dried as necessary, and further calcined to obtain the precursor material (A) which is a powdery regular mesoporous material. Herein, as the solvent of the mixed solution, for example, water, an organic solvent such as an alcohol, or a mixed solvent thereof can be used. In addition, the raw material is selected according to the type of the skeleton; however, an example thereof includes a silica agent such as tetraethoxysilane (TEOS), fumed silica, and quartz sand. Furthermore, as the template, various surfactants, block copolymers, and the like can be used, and it is preferable to select them according to the kind of the synthesis product of the regular mesoporous substance and, for example, in the case of producing MCM-41, a surfactant such as hexadecyltrimethylammonium bromide is ideal. The hydrothermal treatment can be performed, for example, at 80°C or more and 800°C or less, within 5 hours or more and 240 hours or less, and at more than 101 kPa and 2000 kPa or less in a sealed container. The calcining treatment can be performed, for example, in air at 350°C or more and 850°C or less for 2 hours or more and 30 hours or less.

### (Step S2: Impregnation Process)

Next, the prepared precursor material (A) is impregnated with a metal-containing solution to obtain a precursor material (B).

It is sufficient if the metal-containing solution is a solution containing a metal component (for example, a metal ion) corresponding to the metal element (M) constituting the metal oxide fine particle or the metal fine particle of the composite. The metal-containing solution can be prepared, for example, by dissolving a metal salt containing the metal element (M) in a solvent. An example of such metal salt includes a metal salt such as chlorides, hydroxides, oxides, sulfates or nitrates, and thereamong, nitrates are particularly preferable. As the solvent, for example, water, an organic solvent such as an alcohol, or a mixed solvent thereof can be used.

The method of impregnating the precursor material (A) with the metal-containing solution is not particularly limited; however, for example, it is preferable to add the metal-containing solution in small amounts over a plurality of times, while stirring the powdery precursor material (A), before the calcining step described later. In addition, from the viewpoint of facilitating the infiltration of the metal-containing solution into the pores of the precursor material (A), it is preferable to add a surfactant as an additive to the precursor material (A) in advance before adding the metal-containing solution. It is considered that such an additive has a function of coating the outer surface of the precursor material (A), which suppresses the metal-containing solution to be added thereafter from adhering to the outer surface of the precursor material (A), and facilitates the infiltration of the metal-containing solution into the pores of the precursor material (A).

An example of such additive includes a nonionic surfactant such as polyoxyethylene oleyl ether, polyoxyethylene alkyl ether, and polyoxyethylene alkylphenyl ether. Since these surfactants have a large molecular size and cannot infiltrate into the pores of the precursor material (A), there is considered to be no adherence to the inside of the pores, and thus will not prevent the metal-containing solution from infiltrating into the pores. As a method of adding the nonionic surfactant, for example, it is preferable to add the nonionic surfactant in an amount of 50% by mass or more and 500% by mass or less with respect to the precursor material (A), before the calcining step described later. When the addition amount of the nonionic surfactant relative to the precursor material (A) is less than 50% by mass, the above-described suppressing effect is hardly exhibited, and when adding the nonionic surfactant of more than 500% by mass relative to the precursor material (A), the viscosity is excessively increases, which is not preferable. Therefore, the addition amount of the nonionic surfactant to the precursor material (A) is preferably within the above range.

In addition, the addition amount of the metal-containing solution added to the precursor material (A) is preferably appropriately adjusted in consideration of the amount of the metal element (M) in the metal-containing solution impregnated into the precursor material (A) (i.e., the amount of the metal element (M) existing within the precursor material (B)). For example, before the calcining step described later, the addition amount of the metal-containing solution added to the precursor material (A) is preferably adjusted to 10 or more and 1000 or less, and is more preferably 50 or more and 200 or less, in terms of the ratio (atomic ratio Si/M) of silicon (Si) constituting the precursor material (A) relative to the metal element (M) contained in the metal-containing solution added to the precursor material (A). For example, when a surfactant is added to the precursor material (A) as an additive before the metal-containing solution is added to the precursor material (A), the metal element (M) of the metal oxide fine particles or the metal fine particles can be contained in an amount of 0.5% by mass or more and 2.5% by mass or less with respect to the composite, by setting the addition amount of the metal-containing solution added to the precursor material (A) to 50 or more and 200 or less in terms of the atomic ratio Si/M. In the state of the precursor material (B), the amount of the metal element (M) present in the pores thereof will be substantially proportional to the addition amount of the metal-containing solution added to the precursor material (A), if the metal concentration of the metal-containing solution, the presence or absence of the additive, and other conditions such as temperature and pressure are the same. In addition, the amount of the metal element (M) existing within the precursor material (B) is in a proportional relationship to the amount of the metal element constituting the metal oxide fine particles or the metal fine particles existing within the skeleton of the composite. Therefore, by controlling the addition amount of the metal-containing solution added to the precursor material (A) within the above range, the metal-containing solution can be sufficiently impregnated into the pores of the precursor material (A), and the amount of the metal oxide fine particles or the metal fine particles existing within the skeleton of the composite can be adjusted.

After the precursor material (A) is impregnated with the metal-containing solution, a washing treatment may be performed as necessary. As the washing solution, water, an organic solvent such as alcohol, or a mixed solution thereof can be used. In addition, it is preferable to impregnate the precursor material (A) with a metal-containing solution, perform the washing treatment as necessary, and then further conduct a drying treatment. An example of the drying treatment includes natural drying overnight or high temperature drying at 150°C or lower. It should be noted that when the calcining treatment described later is performed in a state in which a large amount of moisture contained in the metal-containing solution or moisture of the washing solution remains in the precursor material (A), since there is concern over the skeleton structure as the regular mesoporous substance of the precursor material (A) being broken, it is preferable to sufficiently dry the precursor material (A).

### (Step S3: Calcining Step)

Next, the precursor material (B) in which the precursor material (A) is impregnated with the metal-containing solution is calcined to obtain a precursor material (C).

The calcining treatment is preferably performed, for example, in air at heat treatment conditions of 350°C or higher and 850°C or lower for 2 hours or more and 30 hours or less. By such calcining treatment, the metal component impregnated into the pores of the regular mesoporous material grows crystals, and the metal oxide fine particles are formed in the pores.

### (Step S4: Hydrothermal Treatment Step)

Next, a mixed solution in which the precursor material (C) and a structure-directing agent are mixed is prepared, and the precursor material (C) is hydrothermally treated to obtain a precursor material (D) which is a SiO₂-based skeleton having a porous structure in which a plurality of metal oxide fine particles is present within the passages.

The structure-directing agent is a template for defining the skeleton structure of the SiO₂-based skeleton and, for example, a surfactant can be used. The structure-directing agent is preferably selected according to the skeleton structure of the SiO₂-based skeleton and, for example, a surfactant such as tetramethylammonium bromide (TMABr), tetraethylammonium bromide (TEABr), or tetrapropylammonium bromide (TPABr) is suitable.

The mixing of the precursor material (C) and the structure-directing agent may be performed during the hydrothermal treatment step or before the hydrothermal treatment step. In addition, the method for preparing the mixed solution is not particularly limited, and the precursor material (C), the structure-directing agent and the solvent may be mixed simultaneously, or the precursor material (C) and the structure-directing agent may be established in a dispersed state in respective solutions in a solvent, and then the respective dispersion solutions may be mixed. As the solvent, for example, water, an organic solvent such as an alcohol, or a mixed solvent thereof can be used. The pH of the mixed solution is preferably adjusted using an acid or a base before performing hydrothermal treatment.

The hydrothermal treatment can be carried out by a known method and, for example, it is preferable to carry out the hydrothermal treatment in a sealed container under treatment conditions of 80°C or more and 800°C or less, for 5 hours or more and 240 hours or less, and more than 101 kPa and 2000 kPa or less. In addition, the hydrothermal treatment is preferably carried out in a basic atmosphere.

Furthermore, in the hydrothermal treatment step, a mixed solution in which the precursor material (C) and the structure-directing agent are mixed is prepared, and the precursor material (C) is hydrothermally treated; however, it is not limited thereto, and the precursor material (C) may be hydrothermally treated without mixing the precursor material (C) and the structure-directing agent.

The precursor material (D), which is a precipitate obtained after the hydrothermal treatment, is recovered (for example, filtered), and preferably then washed, dried and calcined as necessary. As the washing solution, water, an organic solvent such as alcohol, or a mixed solution thereof can be used. An example of the drying treatment includes natural drying overnight or high temperature drying at 150°C or lower. When the calcining treatment is performed in a state where a large amount of moisture remains in the precipitate, since there is concern over the skeleton structure of the precursor material (D) being broken, it is preferable to sufficiently dry the precursor material (D). In addition, the calcining treatment can be performed, for example, in air at the treatment condition of 350°C or higher and 850°C or lower for 2 hours or more and 30 hours or less. By such calcining treatment, the structure-directing agent adhering to the precursor material (D) is burned off. In addition, the precursor material (D) may not be subjected to calcining treatment of the recovered precipitate depending on the intended use.

### (Step S5: Reducing Step)

Step S5 is an optional step. The precursor material (D), which is a SiO₂-based skeleton having a porous structure in which a plurality of metal oxide fine particles exist within the passage, is subject to reduction treatment in a reducing gas atmosphere such as hydrogen gas. By the reduction treatment, the metal oxide fine particles are reduced to form the metal fine particles corresponding to the metal element constituting the metal oxide fine particles. In this way, a precursor material (D) is obtained which is a SiO₂-based skeleton having a porous structure in which a plurality of metal fine particles exists within a passage. The precursor material (D) preferably contains metal fine particles having an average particle size larger than the pore diameter of the SiO₂-based skeleton having a porous structure. The method of obtaining the precursor material (D) is not limited to the above-described method.

### (Step S6: Heat Treatment Step)

Next, the precursor material having a structure in which the metal oxide fine particles are enclosed in the SiO₂-based skeleton obtained in Step S4, or the precursor material having a structure in which the metal fine particles are enclosed in the SiO₂-based skeleton obtained in Step S5, is heat-treated in a high temperature atmosphere in which H₂O is present, whereby the composite can be obtained.

As the heat treatment of the precursor material (D), from the viewpoint of being able to easily control a high temperature atmosphere in which H₂O is present, the heat treatment is preferably performed at 100°C or higher and 1500°C or lower in an atmosphere in which H₂O is present, and thereamong, it is preferably a dry reforming treatment, a treatment by a partial oxidation method which is a similar reforming reaction system, a steam reforming pretreatment, or a steam treatment in which a gas (nitrogen gas or the like) containing a predetermined moisture content is passed through the precursor material (D) heated at 100°C or higher and 1500°C or lower for 24 hours or more.

The SiO₂-based skeleton having a porous structure may be a zeolite or may be amorphous silica.

By the heat treatment in Step S6, a part or the entirety of the SiO₂-based skeleton of porous structure in the precursor material (D) is phase-changed into a crystalline SiO₂ compound.

In the composite obtained in Step S6, the fine particles present within the skeleton body are metal oxide fine particles. In addition, the composite obtained in Step S6 is subjected to a reduction treatment in a reducing gas atmosphere such as hydrogen gas, whereby a composite having a skeleton in which metal fine particles exist can be obtained. By this reduction treatment, the metal oxide fine particles existing within the skeleton body are reduced, and the metal fine particles corresponding to the metal element constituting the metal oxide fine particles are formed.

### [Modification of Composite]

Although an example in which the composite includes the fine particle (hereinafter, also referred to as an internal fine particle) existing within the skeleton has been described above, the composite may further include at least one fine particle held on the outer surface of the skeleton (hereinafter, also referred to as outer fine particle). The outer fine particle includes a metal oxide fine particle or a metal fine particle.

The outer fine particle is a substance that exhibits one or more functions. The function possessed by the outer fine particle may be the same as or different from the function possessed by the internal fine particle. A specific example of the function possessed by the outer fine particle is the same as the function possessed by the internal fine particle, and among them, it is preferable to have a catalytic function, and in this case, this outer fine particle is a catalytic substance. When both the outer fine particle and the internal fine particle are substances having the same function, the material of the outer fine particle may be the same as or different from the material of the internal fine particle. According to such a configuration, the content of the fine particles retained in the composite can be increased, and the function exhibition by the fine particles can be further promoted.

According to the embodiment described above, by establishing the crystalline SiO₂ compound which is stable even under high temperature as a constituent component of the skeleton, it is possible to control a change in the crystal structure of the skeleton accompanying a change in density under high temperatures; therefore, the composite can stably and safely carry out a predetermined reaction over a long period of time.

Although an embodiment has been described above, the present invention is not limited to the above-described embodiment, and various modifications can be made within the scope of the present disclosure, including all aspects included in the gist of the present disclosure and the claims.

### EXAMPLES

Next, Examples and a Comparative Example will be described; however, the present invention is not limited to these Examples.

### (Example 1)

### (Synthesis of Precursor Material (A))

A mixed aqueous solution was prepared by mixing a silica agent (tetraethoxysilane (TEOS), manufactured by Wako Pure Chemical Industries) and a surfactant as a template, pH adjustment was performed as appropriate, and hydrothermal treatment was performed in a sealed container at 100°C for 100 hours. Thereafter, the generated precipitate was separated by filtration, washed with water and ethanol, and calcined in air at 600°C for 24 hours to obtain a precursor material (A), which was MCM-41. It should be noted that hexadecyltrimethylammonium bromide (CTAB) (manufactured by Wako Pure Chemical Industries) was used as the surfactant.

### (Preparation of Precursor Materials (B) and (C))

Next, a metal salt containing Ni element was dissolved in water to prepare a metal-containing aqueous solution. It should be noted that NiOx: nickel(II) nitrate hexahydrate (manufactured by Wako Pure Chemical Industries) was used as the metal salt. Next, the metal-containing aqueous solution was added to the powdery precursor material (A) a plurality of times in small amounts and dried at 105°C for 12 hours or more to obtain a precursor material (B).

It should be noted that the precursor material (A) before the addition of the metal-containing aqueous solution was subjected to a pretreatment of adding an aqueous solution of polyoxyethylene (15) oleyl ether (NIKKOL BO-15V, manufactured by Nikko Chemicals Co., Ltd.) as an additive, and then the metal-containing aqueous solution was added in the above described way.

In addition, the addition amount of the metal-containing aqueous solution to be added to the precursor material (A) was adjusted so that a numerical value when converting into a ratio (atomic ratio Si/M) of silicon (Si) constituting the precursor material (A) relative to the metal element (M) contained in the metal-containing aqueous solution became 100.

Next, the precursor material (B) impregnated with the metal-containing aqueous solution obtained as described above was calcined in air at 600°C for 24 hours to obtain a precursor material (C).

### (Synthesis of Precursor Material (D))

The precursor material (C) obtained as described above and tetrapropylammonium bromide (TPABr) (Tokyo Chemical Industry Co., Ltd.) as a structure-directing agent were mixed to prepare a mixed aqueous solution, and the pH was adjusted to 7.0 in a sealed container, followed by performing hydrothermal treatment at 150°C for 72 hours. Thereafter, the generated precipitate was separated by filtration, washed with water, dried at 100°C for 12 hours or more, and calcined in air at 600°C for 24 hours to obtain a precursor material (D) having metal oxide fine particles and a skeleton with an MFI type zeolite structure.

### (Synthesis of Composite)

Next, 0.2 g of the precursor material (D) was charged into a fixed bed flow reactor, and reduction treatment was performed at 750°C for 90 minutes under the flow of hydrogen gas. Subsequently, as shown in Table 1, the precursor material (D) was heated to 800°C, nitrogen gas with 1% moisture content was allowed to flow through the precursor material (D) at 10 ml/min, and steam treatment was performed for 90 days. In this way, the composite of Example 1 was obtained.

### (Example 2)

A composite of Example 2 was obtained in the same manner as in Example 1 except that, as shown in Table 1, the temperature of the precursor material (D) was raised to 800°C, nitrogen gas with 6% moisture content was allowed to flow through the precursor material (D) at 10 ml/min, and the steam treatment was performed for 8 days.

### (Example 3)

A composite of Example 3 was obtained in the same manner as in Example 1 except that, as shown in Table 1, the temperature of the precursor material (D) was raised to 900°C, nitrogen gas with 2% moisture content was allowed to flow through the precursor material (D) at 10 ml/min, and the steam treatment was performed for 7 days.

### (Comparative Example 1)

Ruthenium (Ru) fine particles were supported on Silicalite-1 by an impregnation method. A Ru nitrate solution (Ru 50 g/L: Tanaka Kikinzoku Kogyo) was used to support 2% by wt on Silicalite-1 to obtain a composite in which Ru fine particles were attached to the outer surface of Silicalite-1 serving as a skeleton.

### (Measurement and Evaluation)

The following measurements and evaluations were performed on the precursor materials (D) and the composites obtained in the above Examples and Comparative Example. The results are shown in Table 1.

### (1) Structure of Precursor Material (D)

The structure of the precursor material (D) was analyzed using an ICP (Induction Coupled Plasma) emission spectrometer and an XRD apparatus. As a result, the precursor material (D) was an MFI type zeolite enclosing nickel oxide fine particles, and Ni, which is the metal element of the nickel oxide fine particles, was contained in an amount of 1% by wt with respect to the precursor material (D).

### (2) Catalytic Activity Test

As a catalytic activity test of the composite, a dry reforming reaction was performed using each of the composites synthesized above. Specifically, as shown in Table **1,** a dry reforming reaction was performed by flowing a mixed gas at a predetermined amount of fluid and for a predetermined period of time to the composite heated to a predetermined temperature. The produced gas was quantitatively analyzed by GC-TCD and GC-FID, and the CO₂ conversion rate (%) was measured on days 1 and 7 of the catalytic activity test. As an increase/decrease in the catalytic activity of the composite, a value obtained by subtracting the CO₂ conversion rate on the day 7 from the CO₂ conversion rate on the day 1 was calculated.

### (3) Structure of Composite

The composite before and after the catalytic activity test was observed using TEM, and the average particle size of the nickel fine particles or the ruthenium fine particles was measured. In addition, the structure of the composite before and after the catalytic activity test was analyzed using an XRD apparatus, and the abundance ratio of cristobalite contained in the composite was measured. Then, the following ranking was carried out on the change in cristobalite abundance ratio before and after the catalyst activity test.
×: difference in cristobalite abundance ratio before and after the catalytic activity test was 30% or more.
○: difference in cristobalite abundance ratio before and after the catalytic activity test was 3% or more and less than 30%.
Ⓞ: difference in cristobalite abundance ratio before and after the catalytic activity test was less than 3%.

**[Table 1]**

| | Heat treatment conditions of precursor material | | | Average particle size of fine particles before test | Catalytic activity test (dry reforming) | | | Average particle size of fine particles after test | Difference in cristobalite abundance ratio | Increase/decrease in catalytic activity on days 1 and 7 (change in CO₂ conversion rate) |
|---|---|---|---|---|---|---|---|---|---|---|
| | Moisture content in N₂ gas | Heating temperature | Heating time | | Flow rate of mixed gas | Temperature | Time | | | |
| Example 1 | 1% | 800°C | 90 days | 5.22nm | CH₄: CO₂ =5: 5(ml/min) | 800°C | 7 days | 6.85nm | Ⓞ | -1% |
| Example 2 | 6% | 800°C | 8 days | 6.77nm | CH₄: CO₂ =5: 5(ml/min) | 800°C | 7 days | 7.71nm | ○ | 0% |
| Example 3 | 2% | 900°C | 7 days | 3.14nm | CH₄: C₂H₆: CO₂: CO =3.5: 0.6: 5.3: 0.6 (ml/min) | 900°C | 7 days | 3.88nm | ○ | 1% |
| Comparative Example 1 | - | - | - | 19.3nm | CH₄: CO₂ =5: 5(ml/min) | 800°C | 7 days | 21.5nm | × | 0% |

As shown in Table 1, in Examples 1 to 3, since the fine particles were present inside of the skeleton of the porous structure including cristobalite, which is a crystalline SiO₂ compound, the change in the cristobalite abundance ratio was suppressed even when the composite was exposed to high temperatures. From these results, it was indicated that, even when the composite is applied to a molded catalyst or a structured catalyst, it is possible to suppress a change in density under high temperatures, and stably and safely perform a predetermined reaction over a long period of time. On the other hand, in Comparative Example 1, the skeleton of the composite did not contain the crystalline SiO₂ compound, and the fine particles were present inside a zeolite that is not the crystalline SiO₂ compound. As a result, when the composite was exposed to high temperatures, the zeolite changed to cristobalite, whereby the cristobalite abundance ratio increased and a large density change occurred.

FIG. 1 is an image after the catalytic activity test of the pellet obtained by press-molding a predetermined amount of the composite synthesized in Comparative Example 1. As can be appreciated, in the pellet of Comparative Example 1 in which the fine particles were present on the outer peripheral portion of the zeolite that is not the crystalline SiO₂ compound, cracking occurred in a part thereof.

## Claims

1. A composite comprising:
a skeleton having a porous structure and containing a crystalline SiO₂ compound; and
a fine particle including a metal oxide fine particle or a metal fine particle existing within the skeleton.

2. The composite according to claim **1,** wherein the crystalline SiO₂ compound is at least one compound selected from the group consisting of cristobalite, tridymite, quartz, stishovite, and coesite.

3. The composite according to claim 1, wherein an abundance ratio of the crystalline SiO₂ compound in the skeleton is 40% or more.

4. The composite according to claim 1, wherein an average particle size of the fine particles is 0.08 nm or more and 50.00 nm or less.

5. The composite according to claim 1, wherein an average particle size of the metal oxide fine particles is 0.10 nm or more and 50.00 nm or less.

6. The composite according to claim 1, wherein an average particle size of the metal fine particles is 0.08 nm or more and 30.00 nm or less.

7. The composite according to claim 1, wherein the composite is used for Fischer-Tropsch synthesis, steam reforming, dry reforming, partial oxidation reforming, methanol reforming, methanol synthesis, hydrocracking, catalytic cracking, hydrodesulfurization, ammonia cracking, ammonia synthesis, CO shift reaction, reverse shift reaction, exhaust gas purification, fluid catalytic cracking, N₂O cracking, CO treatment, NO cracking, volatile organic material synthesis, volatile organic material removal, NOₓ reduction, alkane dehydrogenation, olefin synthesis or aromatic synthesis.

8. A catalyst structure using the composite according to any one of claims 1 to 7.

9. A production method for a composite, comprising heat treating a precursor material having a structure in which a fine particle including a metal oxide fine particle or a metal fine particle is enclosed in a SiO₂-based skeleton, under a high temperature atmosphere with H₂O present.

10. The production method for a composite according to claim 9, wherein the SiO₂-based skeleton is a zeolite.
